# EUROPÄISCHE PATENTSCHRIFT

(11) **EP 2 876 347 B1**
(45) Veröffentlichungstag und Bekanntmachung des Hinweises auf die Patenterteilung: **25.01.2017**
(21) Anmeldenummer: 14194158.3
(22) Anmeldetag: 20.11.2014
(51) Int. Cl.: E04F 19/00, F16L 59/02, B32B 5/26, F16L 59/04, F16L 59/08, B32B 15/14, B32B 1/08, B32B 3/18, B32B 3/30, E04F 17/02

(54) **Dämmelement zur Wärme- und/ oder Schalldämmung von Rohren, insbesondere Kaminrohren**
Insulation element for the heat and/or sound insulation of pipes, in particular flue ducts
Élément d'isolation thermique ou acoustique de conduits, en particulier de conduits de cheminée

(30) Priorität: 22.11.2013 DE 102013019682
(43) Veröffentlichungstag der Anmeldung: 27.05.2015
(73) Patentinhaber: SAINT-GOBAIN ISOVER G+H AG, 67059 Ludwigshafen (DE)
(72) Erfinder: Bissinger, Klaus, 67271 Kleinkarlbach (DE); Albrecht, Volker, 67360 Lingenfeld (DE)
(74) Vertreter: Bockhorni & Kollegen

(56) Entgegenhaltungen:
- EP-A2- 1 031 782
- WO-A1-2004/091910
- WO-A1-2006/123015
- CH-A- 326 674
- DE-A1- 2 309 866
- DE-A1- 2 416 630
- DE-A1- 3 433 180
- DE-A1- 19 517 364
- DE-B- 1 236 393
- GB-A- 1 337 394
- GB-A- 2 032 845
- JP-A- H07 293 985
- JP-A- 2006 308 071
- JP-A- 2010 091 134
- US-A- 4 590 108

## Beschreibung

Die Erfindung betrifft ein Dämmelement gemäß dem Oberbegriff des Patentanspruches 1, welches insbesondere für Kamine in Form von vorzugsweise großformatigen Kaminrohrschalen anwendbar ist.

Rohrschalen aus mit Bindemittel versetzter und ausgehärteter Mineralwolle für die Wärme und/ oder Schalldämmung von Rohren sind allgemein bekannt. Ein maßgeblicher Anwendungsfall ist hierbei die Dämmung von Rohrleitungen für die Abführung von Abgasen, die bei der Verbrennung von fossilen Brennstoffen in Heizungsanlagen diverser Art gebildet werden. Ein Hauptanwendungsfall ist hierbei die Dämmung von abgasführenden Kaminrohren von Kaminsystemen für Gebäude, die häufig innerhalb von Kaminmantelsteinen angeordnet oder aber freiliegend außerhalb eines Gebäudes mit entsprechender Rohrdämmung geführt sind.

Diese Rohrschalen werden hinsichtlich des Herstellungsverfahrens im Wesentlichen in zwei Varianten unterschieden, was auch in der Namensgebung dieser Rohrschalen zum Ausdruck kommt.

Die erste Variante betrifft sogenannte gewickelte Schalen. Hierbei wird im Allgemeinen ein Rohvlies aus Mineralwollfasern mit noch nicht ausgehärtetem Bindemittel in eine runde, das heißt rohrförmige Form gebracht, so dass nach anschließender Aushärtung des Bindemittels der rohrförmige Formkörper einer solchen Rohrschale entsteht. Die Aushärtung kann hierbei im Stand der Technik unterschiedlich vorgenommen werden, etwa beispielsweise durch Mikrowellenaushärtung oder durch Durchströmungsaushärtung, bei der durch die gewickelten Schalen Heißluft durchgeführt wird und es dadurch zu einer Polymerisierung und Verfestigung des Bindemittels kommt.

Nach der DE 1 660 022 erfolgt die Herstellung einer Rohrschale dadurch, dass ein bindemittelhaltiges Mineralwollvlies um einen Dorn herum spiralförmig aufgewickelt wird, so dass ein endloser Rohrschalenstrang entsteht, der dann durch entsprechendes Schneiden oder Sägen auf die gewünschte Länge zugeschnitten wird.

Zum Aufbringen dieser Rohrschalen werden diese auf einer Seite mit einem von der äußeren Mantelfläche der Rohrschale bis zur inneren Mantelfläche der Schale gehenden Längsschnitt versehen, so dass die Rohrschalen aufgeklappt und geeignet um eine Leitung gelegt werden können. Der Verbund erfolgt dann entweder durch Aufbringen eines Klebers auf die Stoßflächen der Rohrschale bzw. mittels von außen aufgebrachten Bindemitteln oder mechanischen Befestigungselementen, z.B. Bändern. Große praktische Bedeutung hat auch ein Verbund in Form einer außenseitigen Kaschierung mit einer überstehenden Verklebungslasche.

Nach der DE 197 04 988 A1 werden analog Rohrschalen aus Mineralwolle in einer Wickelstation hergestellt, in der eine mit einem aus härtbaren Bindemittel versehene Mineralwollebahn um einen zylinderförmigen Kern gewickelt und schließlich der Formkörper zur Bildung der Rohrschale nach einem entsprechenden Glättungsvorgang ausgehärtet wird. Dieses Dokument beschreibt weitere Bearbeitungsvorgänge zur Herstellung der Rohrschale, insbesondere ein Schleifen der Oberfläche der Rohrschalen.

Weiterhin ist aus der DE 32 35 342 C2 ein Verfahren bekannt, bei dem zur Herstellung von Zylinderhalbschalen für Rohrisolierungen mit einem Kunstharzzusatz versehene Mineralwollvliese in einem Formhohlraum durch Wärmebehandlung verfestigt. Der Formhohlraum ist durch eine halbzylinderische Innenform mit seitlichen Flanschen gebildet, auf die nach dem Auflegen der Mineralvliese auf die Innenform eine komplementäre Außenform gelegt und damit der Formhohlraum zur Bildung der Zylinderhalbschale geschlossen wird.

Nach Entnahme des Rohrschalensegments aus der Form erfolgt ein maßgerechtes Zuschneiden des Übermaßes an den Trennflächen. Die Rohrschale selbst wird dadurch gebildet, dass die zylinderförmigen Halbschalen um eine zu dämmende Rohrleitung gelegt und - wie bereits in Zusammenhang mit der DE 1 660 022 beschrieben - in allgemein bekannter Weise verbunden werden. In der Struktur kommt diese Dämmung aus zwei Halbschalen den gewickelten Schalen nahe.

Schließlich ist aus der US 3,341,890 ein Verfahren bekannt, bei dem ein bindemittelhaltiges Granulat in Form benetzter Flocken mittels einer Formgebungsmaschine in einen Rohrschalenstrang gepresst und anschließend ausgehärtet wird. Dieses Verfahren hat sich allerdings in der Praxis nicht durchgesetzt.

Je nach den Dämmkriterien ist es im Stand der Technik auch bekannt, ein zu dämmendes Rohr mit zwei zueinander konzentrische Rohrschalenkörper zu ummanteln. Die Rohrschale ist hierbei mit einem Trennschnitt auf einer Seite der Rohrschale und einem Einschnitt auf der gegenüberliegenden Seite der Rohrschale versehen, so dass ein Aufklappen der Rohrschale möglich ist, um die Rohrschale um das zu dämmende Rohr zu legen. Der Durchmesser der äußeren Rohrschale ist hierbei an den Außendurchmesser der inneren Rohrschale angepasst.

In diesem Zusammenhang ist es auch bekannt (WO 2006/123 015), eine solche mehrlagige Rohrummantelung eines zu dämmenden Rohres durch einen Wicklungsvorgang nur einer Mineralwollbahn herzustellen, die im Falle einer zweilagigen Ummantelung beispielsweise Abschnitte mit unterschiedlicher Dichte aufweist, so dass nach dem Aufwickeln der Mineralwollbahn um einen Dorn eine innere Lage mit einer größeren Dichte und eine darauf aufgewickelte äußere Lage mit einer geringen Dichte, jedoch beispielsweise einer größeren Dicke, erzeugt wird.

Auch hier weist die zwei- oder dreilagige Rohrschale auf einer Seite zumindest einen durchgehenden Trennschnitt und diametral gegenüberliegend einen teilweisen Einschnitt auf, so dass die Rohrschale insgesamt aufgeklappt und dadurch geeignet um das zu dämmende Rohr gelegt werden kann.

Derartige gewickelte Schalen bzw. Wickelschalen haben sich aufgrund Ihrer guten Dämmwirkung bewährt, erfordern jedoch einen vergleichsweise großen prozesstechnischen Aufwand insbesondere unter Berücksichtigung der Aushärtung der Schalen. Diese sind nämlich für die übliche kostengünstige Aushärtung in Tunnelöfen ungeeignet und insbesondere im Falle größerer Rohrschalendicken muss ein erhöhter Aufwand für eine einwandfreie Aushärtung gepflegt werden. Ein weiterer nicht unerheblicher Nachteil ist die geringere mechanische Elastizität und Festigkeit an den Stirnflächen, was beim Aufbringen der Schalen Probleme bereitet, insbesondere vor allem bei einem Verschieben auf einer zu dämmenden Rohrleitung für den Verschluss der Fugen benachbarter Rohrschalen nachteilhaft ist, insbesondere im Falle von klemmenden Rohrschalen.

Gemäß der zweiten Variante werden die Rohrschalen aus Rohlingsblöcken von bereits ausgehärteter Mineralwolle geschnitten was insbesondere bei Verwendung von Steinwolle als Mineralwolle im Allgemeinen der Fall ist. Diese Rohrschalen werden auch als geschnittene Rohrschalen bezeichnet.

Ein solches Verfahren ist beispielsweise aus der EP 0 927 319 B1 bekannt, bei der Rohrschalen im Gesamten aus derartigen Mineralwollblöcken herausgeschnitten werden und zwar inklusive Trennschlitz und gegenüberliegendem Einschnitt, der ein späteres Aufklappen der geschnittenen Rohrschale ermöglicht. Je nach Durchmesser der Rohrschalen kann der Rohlingsblock aus mehreren aufeinandergelegten Faserplatten gebildet sein, aus dem dann nach dessen Aushärtung die Rohrschalen mittels Drahtsägen und dergleichen herausgeschnitten werden. Problematisch ist hierbei der vergleichsweise große Schnittanfall gegenüber der ersten Variante, so dass diese zweite Variante maßgeblich für Rohrschalen mit geringerem Außendurchmesser verwendet wird. Nachteilhaft ist ferner die ungünstige Faserorientierung in einer solchen geschnittenen Rohrschale, da ein Wechsel zwischen einer Stellung der Fasern orthogonal und parallel zur Oberfläche des zu dämmenden Rohres erfolgt, so dass die Rohrschale insgesamt über den Umfang ungleichmäßige Dämmeigenschaften aufweist.

Anstelle des Schneidens ganzer und rundum geschlossener Rohrschalen aus Rohlingsblöcken ist es in diesem Zusammenhang auch bekannt, Schalensegmente herauszuschneiden, die analog zu den Segmentelementen nach der DE 32 35 342 zu einer vollumfänglichen Dämmung eines Rohres zur Bildung einer Rohrschale zusammengesetzt werden, insbesondere für Rohre mit größerem Durchmesser.

Schließlich ist aus der EP 1 097 335 B1 ein Verfahren bekannt, bei dem ein mehrschichtiges Vliesmaterial aus Mineralwolle mit einer ersten Schicht höherer Rohdichte und einer zweiten Schicht geringerer Rohdichte wellenförmig aufgefaltet, komprimiert und schließlich in dieser Ausrichtung gehärtet wird, wonach dann Rohrschalensegmente ausgeschnitten und spanabhebend bearbeitet werden, so dass sich ein zweischichtiger Rohrschalenaufbau mit außenliegend höherer Rohdichte ergibt.

Rohrschalen, die nach der zweiten Variante hergestellt sind, haben den Vorteil, dass sie in der Regel kostengünstiger mit weniger Fertigungsaufwand herstellbar sind, jedoch weisen sie grundsätzlich schlechtere Wärmeleitfähigkeitswerte gegenüber der ersten Variante auf.

Aufgabe der Erfindung ist es, Dämmelemente für die Wärme- und/ oder Schalldämmung von Rohren, insbesondere Kaminrohren, in Form von Rohrschalen zu schaffen, die sich sowohl durch gute Wärmeleitfähigkeit, wie auch gute Festigkeitswerte, insbesondere in Bezug auf eine axiale Festigkeit beim Verschieben der aufgesetzten Rohrschale auf dem zu dämmenden Rohr zum Zwecke des Fugenverschlusses benachbarter Rohrschalen, auszeichnen.

Diese Aufgabe wird erfindungsgemäß durch die im Anspruch 1 enthaltenen Merkmale gelöst. Zweckmäßige Weiterbildungen der Erfindung sind durch die Unteransprüche gekennzeichnet. Ferner zeichnet sich ein geeignetes Verfahren durch die entsprechenden Merkmale des Verfahrensanspruches aus.

Die Erfindung betrifft maßgeblich ein Dämmelement für die Wärme- und/ oder Schalldämmung von Rohren bzw. Rohrleitungen, insbesondere Kaminrohren von Kaminsystemen, in Form einer Rohrschale aus mit Bindemitteln versetzter und ausgehärteter Mineralwolle. Die Rohrschale begrenzt hierbei mit ihrer inneren Mantelfläche vorzugsweise einen rotationszylindischen und sich längs der Achse der Rohrschale erstreckenden Hohlraum für die Aufnahme des zu dämmenden Rohres. Ferner zeichnet sich die Erfindung durch einen mehrschichtigen, insbesondere zweischichtigen Aufbau aus. Nach Maßgabe der Erfindung weist eine solche Rohrschale eine innere und eine äußere rohrfömige Schicht auf, wobei die äußere Rohrschicht durch einen gewickelten Rohrschalenkörper, hingegen die innere Rohrschicht durch einen geschnittenen Rohrschalenkörper gebildet ist.

Ein gewickelter Rohrschalenkörper im Sinne der Definition nach Maßgabe der Erfindung ist entsprechend den obigen Ausführungen eine Schale, bei der ein Rohvlies mit noch nicht aus gehärtetem Bindemittel in eine runde Form gebracht, insbesondere um einen Dorn gewickelt wird, und erst anschließend das Bindemittel zur Herstellung des Schalenkörpers ausgehärtet wird. Der gewickelte Rohrschalenkörper wird im Folgenden der Einfachheit halber auch als Wickelschale bezeichnet.

Ein geschnittener Rohrschalenkörper im Sinne der Erfindung ist eine Schale, die aus bereits ausgehärteter Mineralwolle geschnitten ist entsprechend der oben dargestellten zweiten Variante. Der Einfachheit halber wird der geschnittene Rohrschalenkörper im Folgenden auch als geschnittene Schale bezeichnet.

Die Erfindung zeichnet sich durch eine gute Wärmeleitfähigkeit der Rohrschale wie auch durch eine optimierte Festigkeit, insbesondere axiale Festigkeit bei gleichwohl einer ausreichenden mechanischen Elastizität an den Stirnflächen aus, was vorteilhaft beim Anbringen der Rohrschalen, insbesondere beim Verschieben dieser Rohrschalen auf der zu dämmenden Rohrleitung zum Zwecke des Verschließens der Fugen benachbarter Rohrschalen ist. Die gute Wärmeleitfähigkeit der erfindungsgemäßen Rohrschale basiert vor allem maßgeblich auf dem Umstand, dass die äußere Wickelschale sich im Wesentlichen durch einen laminaren Faserverlauf der Mineralwolle auszeichnet mit einer bevorzugt parallelen Anordnung der Fasern zur Oberfläche des zu dämmenden Rohres bzw. zu der äußeren und inneren Mantelfläche der Rohrschale. Zugleich ergibt sich eine einfache Fertigung, da für die Herstellung der erfindungsgemäßen Rohrschale der innere Rohrschalenkörper durch die äußere Wickelschale gehalten wird, ohne dass die Verwendung eines zusätzlichen Binders erforderlich wäre, vielmehr kann der innere Rohrschalenkörper bzw. können die Segmentschalen, aus denen sich der innere Rohrschalenkörper zusammensetzt, einfach in die Wickelschale hineingesteckt werden. Die bislang bei Segmentschalen erforderlichen Haltemittel wie Bänder, Kleber und dergleichen entfallen somit. Aus Gründen der vereinfachten Herstellung ist es bevorzugt, dass die Segmentschalen eine identische Form, d.h. einen identischen Querschnitt, aufweisen.

Nach Maßgabe der Erfindung sind die Rohrschichten konzentrisch zu einander angeordnet und liegen vorzugsweise ohne Spaltbildung aneinander. Hierbei bildet die Rohrschale ein quasi einstückiges Bauteil infolge des festen Verbundes beider Rohrschalenkörper und damit insgesamt einen stabilen Rohrschalenaufbau.

In vorteilhafter Weise wird hierbei die innere Rohrschicht durch die äußere Rohrschicht gehalten ohne dass zusätzliches Bindemittel erforderlich wäre, sozusagen durch Formschluss beider konzentrisch ineinander angeordneter Rohrschichten, was neben der Handhabung auch die Herstellung vereinfacht.

Zweckmäßigerweise weisen die laminare äußere Wickelschale und die Segmentschalen unabhängig voneinander eine Rohdichte im Bereich von 60 bis 150 kg/m³, vorzugsweise von 80 bis einschließlich 135 kg/m³ auf. Der Bindemittelgehalt kann in geeigneter Weise für die laminare äußere Schale und die Segmentschale unabhängig voneinander eingestellt werden im Bereich von 2 bis 7 %, bevorzugt von 2 bis 4 %. Diese Rohdichtebereiche und Bindemittelgehalte sind einerseits für die Wärmeleitfähigkeit der Rohrschale aber auch für die Festigkeit der Rohrschale vorteilhaft.

Zur weiteren Stabilisierung des Rohrschalenaufbaus nach Maßgabe der Erfindung kann zwischen äußerer Wickellage und der inneren Segmentlage ein Verstärkungsmaterial vorgesehen werden. Hierzu eignen sich beispielsweise Vliese, Gewebe und/oder Gewirke, insbesondere Glasvliese und Glasgewirke.

Ferner ist es zweckmäßig zwischen Wickellage und Segmentlage eine Lage eines Trübungsmittels vorzusehen. Als Trübungsmittel eignen sich beispielsweise mit Graphen oder Graphit beschichtete Vliese, Gewerke und dergleichen. Dadurch ergibt sich auch eine exzellente Dämmwirkung gegen Strahlungstransport, insbesondere bei hohen Temperaturen.

Durch die erfindungsgemäßen Maßnahmen erfolgt eine Verknüpfung der Wickelschale mit den Segmentschalen im Sinne eines synergistischen Effekts, so dass sowohl gute Dämmeigenschaften wie auch gute mechanische Eigenschaften bei kostengünstiger Fertigung der Rohrschale als solche gewährleistet werden.

Nach einem weiteren Aspekt der Erfindung wird die innere Mantelfläche der Rohrschale so aufbereitet, dass ein Ausgleich von Fertigungstoleranzen für die Aufnahme des zu dämmenden Rohres möglich ist. Nach Maßgabe der Erfindung wird dies dadurch erreicht, dass an der inneren Mantelfläche der Rohrschale Vorsprünge ausgebildet sind, die nach innen in Richtung des Hohlraums für die Aufnahme des zu dämmenden Rohres gerichtet sind. Dadurch ist es möglich, in fertigungstechnisch einfacher Weise über die Vorsprünge Fertigungstoleranzen sowohl des Dämmelements wie auch der zu dämmenden Rohrleitung bzw. der damit verbundenen Systemkomponenten auszugleichen. Erreicht wird dies dadurch, dass die Vorsprünge aufgrund ihrer Eigenelastizität bei der Aufnahme des zu dämmenden Rohres entsprechend elastisch deformiert und dadurch vorgespannt werden, was infolge der dabei aufgebauten Druckspannung zu einer festen Halterung zwischen Rohrschale und zu dämmendem Rohr führt und zwar auch unter Berücksichtigung entsprechender Fertigungstoleranzen.

Hierbei ist es zweckmäßig, die Vorsprünge in gleichmäßigen Abständen zueinander auf der inneren Mantelfläche des Dämmelements anzuordnen, um über den Umfang gleichmäßige Druckverhältnisse beim Einstecken des zu dämmenden Rohres in die erfindungsgemäße Rohrschale zu gewährleisten. Zweckmäßigerweise sind die Vorsprünge als Wülste oder aber als Rippen ausgebildet. Im Falle der rippenförmigen Ausbildung erstrecken sich die Rippen im Wesentlichen in Längsrichtung der Rohrschale.

In einer weiteren zweckmäßigen Ausbildung ist die Rohrschale außenseitig kaschiert, etwa durch Verwendung einer Aluminiumfolie oder eines Glasvlieses. Eine derartige Kaschierung verbessert die Handhabung, die Haptik sowie die Optik, was bei sichtbaren Rohrleitungen eine Rolle spielen kann.

In einer weiteren Ausgestaltung der Erfindung ist es zweckmäßig, wenn die Wickelschale und die innere Segmentlage in Längsrichtung der Rohrschale versetzt angeordnet sind, was eine Unterbrechung der Fuge zwischen benachbarten Rohrschalen durch eine entsprechende Schulter zur Folge hat.

In weiterer Fortbildung der Erfindung ist die Dicke der äußeren Wickelschale geringer als die Dicke der inneren geschnittenen Schale, was insbesondere kostenmäßige Vorteile vor allem bei Rohren mit großem Durchmesser bringt. In der Praxis können erfindungsgemäße Rohrschalen bis zu Durchmessern von 800 mm und auch darüber verwendet werden.

Die Erfindung betrifft ferner ein Verfahren zur Herstellung eines entsprechenden Dämmelements in Form einer Rohrschale für die Wärme- und/ oder Schalldämmung von Rohrleitungen, insbesondere Rohren eines Kaminsystems. Das erfindungsgemäße Verfahren zeichnet sich dadurch aus, dass die äußere Schicht entsprechend einer Wickelschale und die innere Schicht entsprechend einer geschnittenen Rohrschale hergestellt und die beiden dadurch hergestellten Rohrschalenkörper dergestalt ineinander gesteckt werden, dass der innere Rohrschalenkörper ohne jedes zusätzliche Bindemittel mit Festsitz und entsprechendem Halt innerhalb der Wickelschale aufgenommen ist, die sozusagen eine tragende Hülle für den inneren Rohrschalenkörper bildet. Dadurch werden Verbindungsmittel für die geschnittene Rohrschale entbehrlich und vereinfachen sich insgesamt die Herstellungskosten bei gleichwohl guter Wärmeleitfähigkeit der Rohrschale als solcher. In diesem Zusammenhang ist es zweckmäßig, die äußere Rohrschale als geschlossene Schale mit also kreisringförmigen Querschnitt herzustellen, wohingegen der innere Rohrschalenkörper als rundum geschlossener Formkörper oder aus mehreren teilzylinderförmigen Segmentschalen zum zylinderförmigen Rohrschalenkörper zusammengesetzt ist. Auch hierbei sind für die Stoßstellen keine zusätzlichen Bindemittel, wie etwa Kleber und dergleichen erforderlich, vielmehr kann die dergestalt aus mehreren Segmentschalen zusammengesetzte innere Rohrschale in die äußere Wickelschale eingesetzt werden. Die Anzahl der Segmentschalen ergibt sich aus der Dicke der Rohlingsblöcke und den speziellen geometrischen Abmessungen im konkreten Einzelfall. Eine weitere Rolle spielt eine Optimierung des Zuschnitts im Hinblick auf die Reduzierung des Verschnittanfalls. Üblicherweise steigt die Anzahl der Segmente mit wachsendem Durchmesser an.

Hierbei ist es nach einer Fortbildung der Erfindung zweckmäßig, beim Einstecken des inneren Rohrschalenkörpers in den äußeren Rohrschalenkörper einen Längsversatz zu bewerkstelligen, so dass die normalerweise senkrecht zur Längsachse der Rohrschalen verlaufende Fuge benachbarter Rohrschalen durch eine Schulter, insbesondere eine parallel zur Längsachse der Rohrschalen verlaufende Schulter unterbrochen ist. Dies trägt zur Verhinderung von Kältebrücken im Bereich der Fugen bei.

Insbesondere für Rohrschalen mit größerem Durchmesser ist es zweckmäßig, die Dicke des inneren Rohrschalenkörpers größer zu gestalten als die Dicke des äußeren Rohrschalenkörpers, was insbesondere mit Hinsicht auf die Herstellung der Rohrschale kostenmäßige Vorteile bringt.

Nachfolgend werden bevorzugte Ausführungsbeispiele der Erfindung anhand der Figuren beschrieben. Darin zeigen
- Figur 1: eine schematische Stirnansicht einer Rohrschale gemäß der Erfindung sowie
- Figur 2: eine Stirnansicht einer weiteren Ausführungsform der Erfindung.

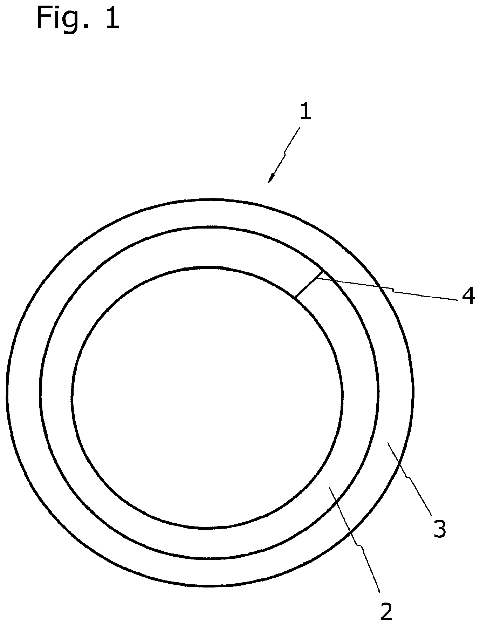

Figur 1 zeigt rein schematisch die Stirnansicht einer zweischichtigen Rohrschale 1, die aus einem inneren Rohrschalenkörper 2 und einem äußeren Rohrschalenkörper 3 aufgebaut ist. Während der Rohrschalenkörper 3 als rundum geschlossener Kreisringzylinder ausgebildet ist, weist der Rohrschalenkörper 2 einen Sägeschlitz 4 auf. Die Rohrschalenkörper 2 und 3 sind passgerecht ineinander gesteckt, wobei die Abmessung des Innendurchmessers des äußeren Schalenkörpers 3 auf die des Außendurchmesser bzw. die Mantelfläche des inneren Rohrschalenkörpers 2 entsprechend ausgelegt ist, so dass der in den äußeren Rohrschalenkörper 3 eingesteckte innere Rohrschalenkörper 2 mit Festsitz, jedoch ohne Bedarf eines zusätzlichen Bindemittels gehalten ist und die Rohrschale sozusagen infolge des dadurch bewerkstelligten festen Verbunds in einem Stück gehandhabt werden kann. Beide Rohrschalenkörper sind aus mit Bindemittel vernetzter Mineralwolle ausgebildet und zwar insbesondere aus Glaswolle und vor dem Zusammenstecken ausgehärtet. Hierbei ist der äußere Rohrschalenkörper durch einen Wickelvorgang einer Mineralwollebahn hergestellt, so dass die Fasern der äußeren Rohrschicht 3 einen laminaren Faserverlauf mit Faserausrichtung im Wesentlichen parallel zur Oberfläche der Mantelflächen des Rohrschalenkörpers 3 aufweisen. Dadurch ergibt sich eine gute Wärmeleitfähigkeit.

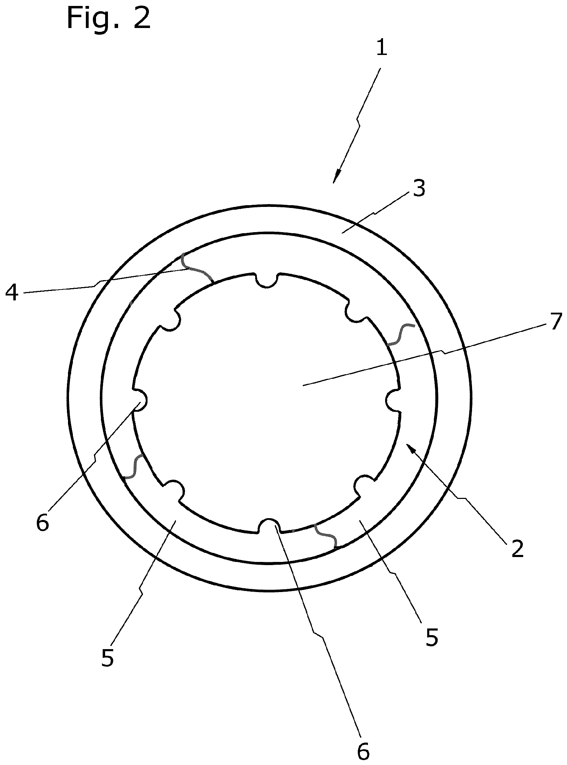

Der innere Rohrschalenkörper ist vorzugsweise aus einem Mineralwollekörper ausgeschnitten, stellt also einen geschnittenen Formkörper dar, der nicht gewickelt wurde und über gute Festigkeitseigenschaften verfügt. Dadurch ergibt sich eine synergistische Ergänzung der Vorteile beider Rohrschichten 2 und 3 mit gutem Elastizitätsverhalten an der Stirnseite und einer guten axialen Festigkeit für das Ineinanderstecken der beiden Schichten und auch das Einstecken des zu dämmenden Rohres. Figur 2 zeigt eine vergleichbare Stirnansicht, wiederum in rein schematischer Darstellung mit einem kreisringzylindrischen Aufbau der beiden Schichten 2 und 3 der Rohrschale 1.

Anders als in der vorhergehenden Ausführungsform ist allerdings die innere Rohrschale 2 aus vorzugsweise vier vorgefertigten, insbesondere identischen Segmentschalen (5) zusammengesetzt, die an den Stoßstellen 4 Stirn an Stirn zusammen liegen. Bindemittel sind hierbei nicht erforderlich, vielmehr kann der insoweit zusammengestellte innere Rohrkörper 2 ohne weiteres in den äußeren Rohrschalenkörper 3 mit leichtem Druck gesetzt werden, so dass er dann mit Festsitz innerhalb des eine tragende Hülle bildende Rohrschalenkörpers 3 gehalten ist. Hierzu kann der innere Rohrkörper 2 gegenüber dem äußeren Rohrschalenkörper 3 ein geringes Übermaß von beispielsweise 3 bis 5 mm im Durchmesser aufweisen.

Zudem können an der inneren Mantelfläche der im dargestellten Ausführungsbeispiel dargestellten vier Segmentschalen 5, die sich zu einem kreisringförmigen Zylinder ergänzen wulst- oder rippenartige Vorsprünge 6 ausgebildet, die nach Innen in den Hohlraum 7 vorstehen und aus Gründen der Fertigungstoleranz ausgebildet sind. Beim Einstecken eines zu dämmenden Rohres bzw. beim Aufschieben der Rohrschalen 1 auf ein zu dämmendes Rohr werden die Wulste je nach Fertigungstoleranz mehr oder weniger stark zusammengedrückt und unter Vorspannung, so dass auch unter Beachtung von allfälligen Fertigungstoleranzen aufgrund dieser Vorsprünge 6 ein jederzeit einwandfreier und fester Halt des Rohres innerhalb der Rohrschalen 1 gewährleistet ist.

Für eine erfindungsgemäße Rohrschale mit guten Akustikeigenschaften kann die Rohdichte der Wickelschale beispielsweise etwa 120 kg/m³ zur Bereitstellung einer hohen mechanischen Stabilität, Haptik und Optik, die des inneren Rohrkörpers etwa 85 kg/m³ für die Schalldämmung betragen.

Zum Zweck der Reduzierung des Volumens können im Fall einer Segmentschale als innerer Rohrkörper die Segmente als Einzelelemente in den Hohlraum der Wickelschale eingelegt werden und diese komprimiert unter Reduzierung des Hohlraumvolumens verpackt und transportiert werden. Der solcherart vorliegende Bausatz kann am Einsatzort nach Dekompression der Verpackungseinheit in der bereits beschrieben Art zur erfindungsgemäßen Rohrschale zusammengesetzt werden.

## Patentansprüche

1. Dämmelement zur Wärme- und/ oder Schalldämmung von Rohren, insbesondere Kaminrohren, mit mindestens einer aus mit Bindemittel versetzter und aus gehärteter Mineralwolle ausgebildeten Rohrschale (1), wobei die Rohrschale (1) mit ihrer inneren Mantelfläche einen vorzugsweise zylindrischen und sich längs der Achse der Rohrschale erstreckenden Hohlraum für die Aufnahme des zu dämmenden Rohres begrenzt und die Rohrschale (1) mehrschichtig, insbesondere zweischichtig aufgebaut ist,
**dadurch gekennzeichnet, dass**
die Rohrschale eine innere und eine äußere rohrförmige Schicht aufweist, und dass die äußere Rohrschicht durch einen gewickelten Rohrschalenkörper (3) und die innere Rohrschicht durch einen geschnittenen Rohrschalenkörper (2) gebildet ist.

2. Dämmelement nach Anspruch 1,
**dadurch gekennzeichnet, dass**
die Rohrschichten (2, 3) bezüglich der Längsachse der Rohrschalen (1) zueinander konzentrisch angeordnet sind.

3. Dämmelement nach Anspruch 1 oder 2,
**dadurch gekennzeichnet, dass**
die Mineralwollfasern der äußeren Schicht (3) laminar angeordnet sind und zwar vorzugsweise im Wesentlichen parallel zu den Mantelflächen der Rohrschale (1) bzw. der Mantelfläche des zu dämmenden Rohres.

4. Dämmelement nach einem der vorhergehenden Ansprüche,
**dadurch gekennzeichnet, dass**
der innere Rohrschalenkörper (2) in Art einer Einsteckverbindung durch den äußeren Rohrschalenkörper (3) gehalten ist, insbesondere bindemittelfrei mit Festsitz.

5. Dämmelement nach einem der vorhergehenden Ansprüche,
**dadurch gekennzeichnet, dass**
der innere Rohrschalenkörper (2) aus geschnittenen Segmentschalen (5) zusammengesetzt und im äußeren Rohrschalenkörper (3) gehalten ist.

6. Dämmelement nach einem der vorhergehenden Ansprüche,
**dadurch gekennzeichnet, dass**
die Rohdichte der äußeren Schicht in einem Bereich von 60 bis 150 kg/m³, vorzugsweise 80 bis 135 kg/m³ liegt und/ oder dass der Bindemittelgehalt der äußeren Schicht (3) im Bereich von 2 bis 7 %, vorzugsweise im Bereich von 2 bis 4 % liegt.

7. Dämmelement nach einem der vorhergehenden Ansprüche,
**dadurch gekennzeichnet, dass**
die Rohdichte der innere Schicht in einem Bereich von 60 bis 150 kg/m³, vorzugsweise 80 bis 135 kg/m³ liegt und/ oder dass der Bindemittelgehalt der inneren Schicht (2) im Bereich von 2 bis 7 %, vorzugsweise im Bereich von 2 bis 4 % liegt.

8. Dämmelement nach einem der vorhergehenden Ansprüche,
**dadurch gekennzeichnet, dass**
auf der inneren Mantelfläche des inneren Rohrschalenkörpers (2) nach innen in Richtung des Hohlraums (7) vorstehende Vorsprünge (6) für einen Toleranzausgleich vorgesehen sind.

9. Dämmelement nach Anspruch 8,
**dadurch gekennzeichnet, dass**
die Vorsprünge wulstartig oder durch Rippen ausgebildet sowie vorzugsweise parallel und vorzugsweise in gleichmäßigen Abstand um den Umfang der Rohrschale ausgebildet sind.

10. Dämmelement nach einem der vorhergehenden Ansprüche,
**dadurch gekennzeichnet, dass**
die Rohrschale (1) außenseitig kaschiert ist, insbesondere mit einer Aluminiumfolie.

11. Dämmelement nach einem der vorhergehenden Ansprüche,
**dadurch gekennzeichnet, dass**
der innere Rohrschalenkörper (2) mit Versatz in Längsrichtung der Rohrschalenachse relativ zur äußeren Wickelschale (3) angeordnet ist.

12. Verfahren zur Herstellung eines Dämmelements nach einem der vorhergehenden Ansprüche,
**gekennzeichnet durch**
Wicklung einer mit Bindemittel versetzten Mineralwollebahn zur Bildung eines äußeren Rohrschalenkörpers sowie dessen nachfolgender Aushärtung, Zuschneidung eines inneren Rohrschalenkörpers (2) aus einem gehärteten Mineralwollekörper sowie anschließend Einstecken des geschnittenen Rohrschalenkörpers (2) mit bindemittelosen Festsitz in den äußeren Rohrschalenkörper (3).

13. Verfahren nach Anspruch 12,
**dadurch gekennzeichnet, dass**
der innere Rohrschalenkörper (2) mit Längsversatz im äußeren Rohrschalenkörper (3) eingesteckt wird, so dass ein mit einer Sperrschulter versehener Fugenübergang bewerkstelligt wird.

14. Verfahren nach einem der Ansprüche 12 oder 13,
**dadurch gekennzeichnet, dass**
eine Verstärkungslage zwischen äußerem und innerem Rohrschalenkörper (2,3) und/ oder eine Lage eines Trübungsmittels, vorzugsweise eines Vlieses aus Graphit oder Graphen, zwischen äußerem und innerem Rohrschalenkörper angeordnet ist.

15. Verfahren nach einem der Ansprüche 12 bis 14,
**dadurch gekennzeichnet, dass**
der innere Rohrschalenkörper (2) aus mehreren separat geformten, vorzugsweise identischen Segmentschalen (5) zusammengesetzt wird.

16. Bausatz zur Bildung eines Dämmelements nach einem der vorhergehenden Ansprüche 1 bis 11, **gekennzeichnet durch** mindestens einen gewickelten Rohrschalenkörper und mindestens einen geschnittenen Rohrschalenkörper (2), und dass die Rohrschalenkörper (2, 3) so ausgebildet sind, dass ein geschnittener jeweils in einen gewickelten Rohrschalenkörper anordenbar ist.

## Claims

1. An insulation element for the heat and/or sound insulation of pipes, in particular of flue ducts, with at least a pipe shell (1) configured of hardened mineral wool containing a binding agent, wherein the pipe shell (1) with its inner lateral surface limits a preferably cylindrical hollow space which extends along the axis of the pipe shell for receiving the pipe to be insulated, and wherein the pipe shell (1) is configured in a multilayered, in particular a two-layered way,
**characterized in that**
the pipe shell includes an inner and an outer pipe-shaped layer and that the outer pipe layer is formed of a wrapped pipe shell body (3) and the inner pipe layer is formed of a cut pipe shell body (2).

2. The insulation element according to claim 1,
**characterized in that**
the pipe layers (2, 3) are arranged concentrically to one another with respect to the longitudinal axis of the pipe shells (1).

3. The insulation element according to claim 1 or 2,
**characterized in that**
the mineral wool fibres of the outer layer (3) are arranged in a laminar way and preferably essentially parallel to the lateral surfaces of the pipe shell (1) or the lateral surface of the pipe to be insulated, respectively.

4. The insulation element according to one of the preceding claims,
**characterized in that**
the inner pipe shell body (2) is held by way of a plug-in-like connection through the outer pipe shell body (3), in particular binder-free with a tight fit.

5. The insulation element according to one of the preceding claims,
**characterized in that**
the inner pipe shell body (2) is composed of cut segment shells (5) and is held in the outer pipe shell body (3).

6. The insulation element according to one of the preceding claims,
**characterized in that**
the gross density of the outer layer lies in a range from 60 to 150 kg/m³, preferably 80 to 135 kg/m³ and/or that the content of the binder agent of the outer layer (3) lies in a range from 2 to 7 %, preferably in the range from 2 to 4 %.

7. The insulation element according to one of the preceding claims,
**characterized in that**
the gross density of the inner layer lies in a range from 60 to 150 kg/m³, preferably 80 to 135 kg/m³ and/or that the content of the binder agent of the inner layer (2) lies in a range from 2 to 7 %, preferably in the range from 2 to 4 %.

8. The insulation element according to one of the preceding claims,
**characterized in that**
protruding projections (6) are provided on the inner lateral surface of the inner pipe shell body (2) to the inside into the direction of the hollow space (7) for a tolerance compensation.

9. The insulation element according to claim 8,
**characterized in that**
the projections are configured bulge-like or by rips and are configured preferably in parallel and preferably evenly spaced around the circumference of the pipe shell.

10. The insulation element according to one of the preceding claims,
**characterized in that**
the pipe shell (1) is laminated at the outside, particularly with an aluminum foil.

11. The insulation element according to one of the preceding claims,
**characterized in that**
the inner pipe shell body (2) is arranged offset in a longitudinal direction of the pipe shell axis relative to the outer wrapped shell (3).

12. A method for producing an insulation element according to one of the preceding claims,
**characterized by**
wrapping a mineral wool panel containing a binding agent for forming an outer pipe shell body as well as its subsequent hardening, cutting an inner pipe shell body (2) out of a hardened mineral wool body as well as subsequent insertion of the cut pipe shell body (2) with a binder-free tight fit into the outer pipe shell body (3).

13. The method according to claim 12,
**characterized in that**
the inner pipe shell body (2) is inserted in the outer pipe shell body (3) with a longitudinal offset so that a bridging of joints provided with a locking shoulder can be achieved.

14. The method according to one of the claims 12 or 13,
**characterized in that**
an enforcement layer is arranged between the outer and the inner pipe shell body (2, 3) and/or a layer of an opacifying agent, preferably of a mat out of graphite or graphene, between the outer and the inner pipe shell body.

15. The method according to one of the claims 12 to 14,
**characterized in that**
the inner pipe shell body (2) is constituted of several separately formed, preferably identical segment shells (5).

16. Assembly set for forming an insulation element according to one of the preceding claims 1 to 11, **characterized by** at least one wrapped pipe shell body and at least one cut pipe shell body (2), and that the pipe shell bodies (2, 3) are configured such that a cut one can be arranged in one wrapped pipe shell body each.

## Revendications

1. Elément isolant destiné à l'isolation thermique et/ou acoustique de tuyaux, en particulier de tuyaux de cheminée, comprenant au moins une enveloppe de tuyau (1) réalisée à partir de laine minérale mélangée avec du liant et durcie, ladite enveloppe de tuyau (1) délimitant avec sa surface latérale intérieure une cavité qui est de préférence cylindrique et s'étend le long de l'axe de l'enveloppe de tuyau et est destinée à recevoir le tuyau à isoler, et l'enveloppe de tuyau (1) étant réalisée en plusieurs couches, en particulier en deux couches, **caractérisé par le fait que** ladite enveloppe de tuyau présente des couches tubulaires intérieure et extérieure et que la couche tubulaire extérieure est formée par un corps enroulé d'enveloppe de tuyau (3) et la couche tubulaire intérieure est formée par un corps coupé d'enveloppe de tuyau (2).

2. Elément isolant selon la revendication 1, **caractérisé par le fait que** les couches tubulaires (2, 3) sont disposées concentriquement l'une à l'autre par rapport à l'axe longitudinal des enveloppes de tuyau (1).

3. Elément isolant selon la revendication 1 ou 2, **caractérisé par le fait que** les fibres de laine minérale de la couche extérieure (3) sont disposées de façon laminaire, à savoir de préférence pour l'essentiel parallèlement aux surfaces latérales de l'enveloppe de tuyau (1) ou bien à la surface latérale du tuyau à isoler.

4. Elément isolant selon l'une quelconque des revendications précédentes, **caractérisé par le fait que** le corps intérieur d'enveloppe de tuyau (2) est maintenu par le corps extérieur d'enveloppe de tuyau (3) à la manière d'un assemblage à emboîtement, en particulier sans liant à ajustage serré.

5. Elément isolant selon l'une quelconque des revendications précédentes, **caractérisé par le fait que** le corps intérieur d'enveloppe de tuyau (2) est assemblé d'enveloppes de segment (5) coupées et est maintenu dans le corps extérieur d'enveloppe de tuyau (3).

6. Elément isolant selon l'une quelconque des revendications précédentes, **caractérisé par le fait que** la masse volumique apparente de la couche extérieure se situe dans une plage allant de 60 à 150 kg/m³, de préférence de 80 à 135 kg/m³, et/ou que la teneur en liant de la couche extérieure (3) se situe dans la plage allant de 2 à 7 %, de préférence dans la plage allant de 2 à 4 %.

7. Elément isolant selon l'une quelconque des revendications précédentes, **caractérisé par le fait que** la masse volumique apparente de la couche intérieure se situe dans une plage allant de 60 à 150 kg/m³, de préférence de 80 à 135 kg/m³, et/ou que la teneur en liant de la couche intérieure (2) se situe dans la plage allant de 2 à 7 %, de préférence dans la plage allant de 2 à 4 %.

8. Elément isolant selon l'une quelconque des revendications précédentes, **caractérisé par le fait que** des projections (6) qui font saillie vers l'intérieur en direction de ladite cavité (7) sont prévues sur la surface latérale intérieure du corps intérieur d'enveloppe de tuyau (2) pour une compensation de tolérance.

9. Elément isolant selon la revendication 8, **caractérisé par le fait que** lesdites projections sont de type bourrelet ou réalisées par des nervures et sont réalisées de préférence parallèlement et de préférence à intervalle régulier autour de la circonférence de l'enveloppe de tuyau.

10. Elément isolant selon l'une quelconque des revendications précédentes, **caractérisé par le fait que** ladite enveloppe de tuyau (1) est stratifiée sur la face extérieure, en particulier avec une feuille d'aluminium.

11. Elément isolant selon l'une quelconque des revendications précédentes, **caractérisé par le fait que** le corps intérieur d'enveloppe de tuyau (2) est disposé à décalage dans la direction longitudinale de l'axe de l'enveloppe de tuyau par rapport à l'enveloppe enroulée extérieure (3).

12. Procédé de fabrication d'un élément isolant selon l'une quelconque des revendications précédentes, **caractérisé par** l'enroulement d'une bande en laine minérale mélangée avec du liant pour former un corps extérieur d'enveloppe de tuyau ainsi que par le durcissement subséquent de celui-ci, la découpe d'un corps intérieur d'enveloppe de tuyau (2) à partir d'un corps en laine minérale durci ainsi que, ensuite, l'engagement du corps d'enveloppe de tuyau (2) coupé dans le corps extérieur d'enveloppe de tuyau (3), par ajustage serré exempt de liant.

13. Procédé selon la revendication 12, **caractérisé par le fait que** le corps intérieur d'enveloppe de tuyau (2) est engagé à décalage longitudinal dans le corps extérieur d'enveloppe de tuyau (3) de manière à réaliser une transition de joint pourvue d'un épaulement de blocage.

14. Procédé selon l'une quelconque des revendications 12 ou 13, **caractérisé par le fait qu'**une couche de renfort est disposée entre les corps extérieur et intérieur d'enveloppe de tuyau (2, 3) et/ou une couche d'un opacifiant, de préférence d'un non-tissé en graphite ou en graphène, est disposée entre les corps extérieur et intérieur d'enveloppe de tuyau.

15. Procédé selon l'une quelconque des revendications 12 à 14, **caractérisé par le fait que** le corps intérieur d'enveloppe de tuyau (2) est assemblé d'une pluralité d'enveloppes de segment (5) formées séparément, de préférence identiques.

16. Kit destiné à la réalisation d'un élément isolant selon l'une quelconque des revendications précédentes 1 à 11, **caractérisé par** au moins un corps enroulé d'enveloppe de tuyau et au moins un corps coupé d'enveloppe de tuyau (2), et que les corps d'enveloppe de tuyau (2, 3) sont réalisés de telle manière qu'un corps coupé d'enveloppe de tuyau peut être disposé respectivement dans un corps enroulé d'enveloppe de tuyau.
